(19) Europäisches Patentamt / European Patent Office / Office européen des brevets

(11) **EP 3 060 074 B1**

(12) **EUROPEAN PATENT SPECIFICATION**

(45) Date of publication and mention
of the grant of the patent:
**25.08.2021 Bulletin 2021/34**

(21) Application number: **14855630.1**

(22) Date of filing: **24.10.2014**

(51) Int Cl.:
*A23L 33/17* (2016.01)   *A23D 9/007* (2006.01)
*A23D 9/013* (2006.01)   *A23D 9/04* (2006.01)
*C11B 5/00* (2006.01)

(86) International application number:
**PCT/CN2014/089376**

(87) International publication number:
**WO 2015/058703 (30.04.2015 Gazette 2015/17)**

(54) **COMPOSITION COMPRISING ALGAL OIL BODIES AND METHODS FOR STABILIZING ALGAL OIL BODIES OR IMPROVING THE OXIDATION RESISTANCE OF THE SAME**

ZUSAMMENSETZUNG ENTHALTEND ALGENÖLKÖRPER SOWIE VERFAHREN ZUR STABILISIERUNG VON ALGENÖLKÖRPERN ODER ZUR ERHÖHUNG VON DEREN OXIDATIONSBESTÄNDIGKEIT

COMPOSITION COMPRENANT OLÉOSOMES D'ALGUES ET PROCÉDÉS POUR STABILISER CES OLÉOSOMES D'ALGUES OU POUR AMÉLIORER LEUR RÉSISTANCE À L'OXYDATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2013 CN 201310513558**

(43) Date of publication of application:
**31.08.2016 Bulletin 2016/35**

(73) Proprietor: **Wilmar (shanghai) Biotechnology Research &
Development Center Co., Ltd.
Shanghai 200137 (CN)**

(72) Inventors:
• **YU, Yu
Shanghai 200137 (CN)**
• **XU, Jun
Shanghai 200137 (CN)**
• **WEI, Wei
Shanghai 200137 (CN)**

(74) Representative: **de Benedetti, Jacopo et al
Società Italiana Brevetti S.p.A.
Piazza di Pietra, 39
00186 Roma (IT)**

(56) References cited:
EP-A1- 1 952 695     WO-A1-2007/115899
WO-A1-2012/106751    CN-A- 102 132 882
CN-A- 103 005 465    CN-A- 103 315 299
US-A1- 2007 141 223  US-A1- 2011 052 680

• **None**

## Description

## Technical Field

The application falls within the field of biochemistry and food processing, relating to modified algal oil bodies, methods for stabilizing algal oil bodies, and methods for improving the oxidation resistance of the same.

## Technical Background

Micro-algae are a class of important marine biological resource rich in nutrients such as fat, protein, astaxanthin and the like. Micro-algal oil can be used to treat cardiovascular and cerebrovascular diseases, reduce blood pressure, protect against cancer, and regulate the function of the immune system, with eicosapentaenoic acid (EPA) and docosahexaenoic acid (DHA) contained therein being of the most interest and commonly used in infant milk powder and health food. Additionally, in recent years, extracting algal oils from micro-algae and converting them into biofuels becomes a promising investigation due to affects from energy crisis (Michael H, et al., Biofuels from algae: challenges and potential, Biofuels, 2010, 1: 763-784).

Current methods for extracting micro-algal oils are mainly chemical methods, which generally comprise extracting micro-algal fermentation products by chemical agents, e.g. n-hexane-. These lead to risks of environmental pollution.

EP 1952695 has disclosed a method for extracting algal oils by utilizing oil bodies, comprising firstly dissolving dry micro-algae with sucrose solution, grinding the solution, and eluting by buffer solutions containing salt ions to obtain purified algal oil bodies. By detecting the properties of the algal oil bodies thus obtained, it was found that the optimal particle size of the algal oil bodies is within the range of 0.5-30 $\mu$m. However, the broad range of the particle size may readily lead to aggregation of droplets of algal oils and oil leakage under normal temperature. Thus, the oil bodies are not suitable for subsequent processing and application of the product (Ghislain YC, et al., Oil bodies and method of producing such oil bodies, EP1952695, 2007-01-31).

Nguyen et al (Nguyen HM, et al. Proteomic profiling of oil bodies isolated from the unicellular green micro-alga Chlamydomonas reinhardtii: With focus on proteins involved in lipid metabolism. 2011, 11:4266-73) extracts algal oil bodies by mimicking the method for extracting oil bodies from plant. However, the method has complicated steps, involving addition of a lot of protease inhibitors, use of many buffers and organic reagents, many times of centrifugation, before obtaining the oil bodies. This method is time-consuming, and the protease inhibitors are expensive.

## Summary of the Invention

There is an urgent need in the art for a method for improving the oxidation resistance of an algal oil body or a method to stabilize an algal oil body to prevent oil leakage.

Therefore, in a first aspect, a composition comprising an algal oil body is provided, wherein said composition comprises an algal oil body, a phospholipid, and an oil body protein from oil crops.

In a second aspect, a method for stabilizing an algal oil body or preventing an algal oil body from oil leakage is provided, wherein said method comprises adding a phospholipid and an oil body protein to the algal oil body. The oil body protein is an oil body protein from oil crops.

The invention is defined by the appended claims.

## Description of the Drawings

Fig. 1 shows the SDS-PAGE protein electrophoretogram.
Fig. 2 is a photo showing the stability of the modified algal oil body.
Fig. 3 is a photo showing the stability of the modified algal oil body.
Fig. 4 shows a statistical graph for the particle sizes of four samples.
Fig. 5 shows a statistical graph for the particle sizes of three samples.
Fig. 6 shows a statistical graph for the particle sizes of three samples.
Fig. 7 shows the conjugated diene values of algal oils from five samples which were treated in oven at 40°C and collected every 12 hours.
Fig. 8 shows the anisidine value (PAV) of algal oils from five samples which were treated in oven at 40°C and collected every 12 hours.

**Specific Mode for Carrying out the Invention**

The inventors of the present application found that modified algal oil bodies, which are more stable, could be obtained by adding an oil body protein and a phospholipid into the algal oil bodies. Additionally, the oil body protein can be used as an anti-oxidant for the algal oil body to confer oxidation resistance to the algal oil body. The oil body protein is an oil body protein from oil crops.

Algal oil body is an oil body structure derived from micro-algae. It comprises some major lipid droplet proteins (MLDP) with relatively small molecule weight, but does not contain an oil body protein from a plant oil body or protein(s) similar to the oil body protein. In some embodiments, algal oil body can be produced from oil-producing algae, such as but not limited to *Schizochytrium sp., Thraustochytrium sp., Crypthecodinium sp.,* etc., especially *Schizochytrium sp.*

Oil body protein from plant can be extracted from plant, such as oil crops. In some embodiments, the processing for the oil body protein does not use chemical auxiliary agent(s) such as n-hexane. Thus, as compared to the synthetic formulations, the oil body protein of plant is natural and beneficial to health, and has potential value in application.

In some embodiments, phospholipid can be one or more of phosphatidylcholine, phosphatidylinositol, phosphatidylethanolamine, phosphatidylserine, and the like. A composition comprising the aforementioned phospholipid(s) can also be used, which may be, such as compound phosphatide (including but not limited to soybean phospholipid) or lecithin.

Therefore, in a first aspect, a composition comprising an algal oil body is provided, which comprises an algal oil body, a phospholipid and an oil body protein. The oil body protein can be an oil body protein of a plant of any source. In one embodiment, the oil body protein is obtained from oil crops, including but not limited to oil body protein from peanut, oil body protein from soybean, oil body protein from rapeseed, oil body protein from sesame, oil body protein from sunflower seed, oil body protein from olive, oil body protein from palm, oil body protein from seed of tea tree, or a mixture of any of the above oil body proteins. In another embodiment, the oil body protein is an oil body protein from peanut.

In some embodiments, the algal oil body can be produced from oil-producing algae, such as but not limited to *Schizochytrium sp., Thraustochytrium sp., Crypthecodinium sp.,* etc., especially *Schizochytrium sp.*

The algal oil body comprises 50-100 parts by weight, preferably 70-100 parts by weight, more preferably 90-100 parts by weight, such as but not limited to 91, 92, 93, 94, 95, 96, 97, 98 and 99 parts by weight, the phospholipid comprises 0.5-10 parts by weight, preferably 0.5-5 parts by weight, 1.0-2.5 parts by weight, or 0.5, 1, 1.5, or 2 parts by weight; and the oil body protein comprises 0-10 parts by weight, such as 2-5 parts by weight, 2.5-4.5 parts by weight, or 2, 3 or 4 parts by The modified algal oil body has improved structural stability and reduced oil leakage.

In a second aspect, a method for stabilizing an algal oil body is provided, wherein the method comprises adding a phospholipid and an oil body protein into the algal oil body.

The oil body protein is from oil crops. In another embodiment, the oil body protein is an oil body protein from peanut.

In some embodiments, the algal oil body can be produced from oil-producing algae, such as but not limited to *Schizochytrium sp., Thraustochytrium sp., Crypthecodinium sp.,* etc., especially *Schizochytrium sp.*

In the method for stabilizing the algal oil body, the algal oil body comprises 50-100 parts by weight, preferably 70-100 parts by weight, more preferably 90-100 parts by weight, such as 91, 92, 93, 94, 95, 96, 97, 98 and 99 parts by weight, the phospholipid added comprises 0.5-10 parts by weight, preferably 0.5-5 parts by weight, more preferably 1.0-2.5 parts by weight, such as 0.5, 1, 1.5, or 2 parts by weight; and the oil body protein added comprises 0.5-10 parts by weight, preferably 2-5 parts by weight, more preferably 2.5-4.5 parts by weight, such as 2, 3 or 4 parts by weight.

The method for stabilizing an algal oil body further comprises sonic oscillation of a mixture of the algal oil body, phospholipid and oil body protein. In another embodiment, the sonic oscillation lasts 5-30 seconds, preferably 10-25 seconds, such as about 10, 15 or 20 seconds. In another embodiment, after sonic oscillation of the mixture of the algal oil body, phospholipid and oil body protein for the above indicated time, the mixture is subjected to an ice bath for 1-10 minutes, such as about 1, 2, 3, 4, 5, 6, 7, 8, 9 or 10 minutes. In some embodiments, the sonic oscillation and the treatment with ice bath are repeated for 2-5 times, such as 2, 3, 4 or 5 times.

The structure of the algal oil body *per se* is not stable. Its particle size is mainly in the range of about 2-4$\mu$m, and the distribution range is relatively wide. This leads to aggregation of oil droplets and oil leakage under normal temperature. Thus, the algal oil body is not suitable for subsequent processing and application.

The inventors of the present application surprisingly found that, addition of both phospholipid and oil body protein to an algal oil body could make the particle size of the algal oil body be close to the particle size of a natural plant oil body, which is in average 2$\mu$m, and to make the particle size be mainly distributed within 1.5-3.5$\mu$m, preferably 1.5-2.5$\mu$m, more preferably 1.5-2.0$\mu$m. Impurity peaks were reduced or disappeared. The distribution range was narrowed. Consequently, the modified oil body is obtained. Without being bound to any theory, the above characteristics of the modified algal oil body may be attributable to the oil body proteins embedded in the monomolecular layer of phospholipid, which can package the algal oil more sufficiently. This indicates that a more uniform and stable monodisperse emulsion system could be formed after addition of phospholipid and oil body protein into an algal oil body, which could effectively prevent the algal oil from aggregation and leaking out.

Also, a method for improving the oxidation resistance of an algal oil body is provided, wherein the method comprises adding an oil body protein into the algal oil body, and adding a phospholipid.

The oil body protein is from oil crops, preferably the oil body protein is an oil body protein from peanut.

In some embodiments, the algal oil body can be produced from oil-producing algae, such as but not limited to *Schizochytrium sp., Thraustochytrium sp., Crypthecodinium sp.,* etc., especially *Schizochytrium sp.*

The algal oil body comprises 50-100 parts by weight, preferably 70-100 parts by weight, more preferably 90-100 parts by weight, such as but not limited to 91, 92, 93, 94, 95, 96, 97, 98 and 99 parts by weight, the phospholipid added comprises 0-10 parts by weight, preferably 0-5 parts by weight, 0-2.5 parts by weight, such as 0.5, 1, 1.5, or 2 parts by weight; and the oil body protein added comprises 0.5-10 parts by weight, preferably 2-5 parts by weight, more preferably 2.5-4.5 parts by weight, or 2, 3 or 4 parts by weight.

The method for improving the oxidation resistance of an algal oil body further comprises sonic oscillation of a mixture of an algal oil body, a phospholipid and an oil body protein. In another embodiment, the sonic oscillation lasts 5-30 seconds, preferably 10-25 seconds, such as about 10, 15 or 20 seconds. In another embodiment, after sonic oscillation of the mixture of an algal oil body, a phospholipid and an oil body protein for the above indicated time, the mixture is subjected to an ice bath for 1-10 minutes, such as about 1, 2, 3, 4, 5, 6, 7, 8, 9 or 10 minutes. In some embodiments, the sonic oscillation and the treatment with ice bath are repeated for 2-5 times, such as 2, 3, 4 or 5 times.

A modified algal oil body having a particle size distributing mainly in the range of 1.5-3.5$\mu$m is described herein.

The particle size of the algal oil body is mainly distributed in the range of 1.5-2.5$\mu$m, preferably 1.5-2.0$\mu$m.

In the present invention, "a particle size (of the algal oil body) distributing mainly in the range of' or similar expression means the distribution range of the particle size of 50% or more, preferably 60% or more, 70% or more, 80% or more, more preferably 90% or more of the algal oil body.

The natural algal oil body obtained after extraction is readily oxidized, as evidenced by increased conjugated diene value and peroxide value, for evaluating the primary oxidation degree, and anisidine value, for evaluating the amount of secondary oxidative products, over time. In contrast, the algal oil body of the subject invention, in which an oil body protein is added, has improved oxidation resistance ability. The amount of the primary oxidative product is effectively reduced and the amount of the secondary oxidative product is not changed within 48 hours. These demonstrate that addition of the oil body protein can increase the oxidation resistance of the algal oil body, which makes its structure more stable and allows it to be stored for a prolonged time.

Additionally, the subject application also describes a method for extracting an algal oil body, comprising subjecting a fermentation liquid of a micro-alga from *Schizochytrium sp., Thraustochytrium sp., Crypthecodinium sp.,* etc., to grinding and shearing, and adding thereinto a phosphate buffer solution containing 0.6 M sucrose, and then centrifugating the mixture. In some embodiments, the micro-alga is from *Schizochytrium sp.*

As compared to conventional chemical methods for extracting oils, extracting algal oils by algal oil body(ies) is more environmental protective with no pollution to the environment and is applicable for industrial production. As compared to the method for extracting an algal oil body as disclosed by Nguyen *et al,* the methods of the subject application have less steps, in particular, skip the addition of protease inhibitors, the use of organic solvents, and several times of centrifugations, which can greatly reduce costs. As compared to EP 1952695, the subject invention directly extracts an algal oil body from a fermentation liquid of a micro-alga from *Schizochytrium sp., Thraustochytrium sp., Crypthecodinium sp.,* etc., thus skips the step of dissolving the micro-alga. This makes all steps be performed in an aqueous phase, thus avoiding the step of eluting by buffer and reducing waste of algal oils.

In the subject application, the term "consisting essentially of' or similar expression indicates a partially open-ended mode of definition, which does not exclude the presence of one or more other non-essential elements, components or steps, as long as these other non-essential elements, components or steps do not virtually affect the property of the invention determined by the main elements, components or steps as listed above. Furthermore, the terms "comprise" or "contain" includes "consist of' and "consist essentially of' or similar expressions.

The term "a" or "an" is generally intended to mean "one or more" unless otherwise indicated.

The contents of all references and documents cited therein are incorporated in the subject invention by reference.

## Examples

The invention will be further illustrated in the following examples by making reference to the Figures. The following examples are for illustrating the invention, and are not intended to make any limitation to the scope of the invention, which will be limited by the claims.

Phosphatidylcholine, phosphatidylinositol, phosphatidylethanolamine and phosphatidylserine used in the examples were all purchased from Sigma.

Culture media used in the examples include:

Seed culture medium (g/L): glucose 30.0, peptone 10.0, yeast extract 5.0, sea salt 15.0. Fermentation medium (g/L): glucose 109.7, peptone 19.2, yeast extract 20.0, sea salt 12.5.

**Example 1: Extraction of Algal oil body and algal protein** (not falling within the scope of the claims)

*Schizochytrium* ATCC20888 was seeded to the seed culture medium and cultured at 28°C and 200 rpm to obtain the seed solution. The seed solution was inoculated to the fermentation medium and cultured at 28°C and 750 rpm for 96 hours to obtain the *Schizochytrium* fermentation liquid.

The *Schizochytrium* fermentation liquid (containing biomass in 100-150 g/l) was sand ground for 20 times, with each time for 5 minutes, at a shear rate of 2,500 rpm. After that, an oil body can be freed from the $200\mu$m sieve pores and isolated from the debris. Phosphate buffer solution (50mM, which contains 0.6M sucrose and has a pH of 7.5), was added in a 1:1 volume ratio. The mixture was centrifuged at 10,000 $\times$g at 4°C for 30 minutes. The solution was separated into three layers, wherein the bottom layer include the debris; the medium layer is an aqueous phase comprising a great amount of soluble proteins; and the top layer is an oil phase coated by a layer of proteins at its outer surface, both of which form the algal oil body. The algal oil body is taken out from the centrifuging tube.

Acetone was added into the algal oil body in a ratio of 1:1. The mixture was subjected to ice bath under gentle agitation for 10-15 minutes. Then, the mixture was centrifuged at 10,000 rpm, 4°C for 10 minutes. The supernate was removed. And the precipitate was suspended in 100mM, pH 7.5 PBS, which has the same volume as the precipitate. The suspension was centrifuged at 10,000 rpm for 30 minutes and the supernate was removed. The precipitate was washed for three times to obtain the algal protein, which is ready for detection of protein.

**Example 2: Extraction of peanut oil body protein** (not falling within the scope of the claims)

Peanut kernels were dimmed in 50mM, pH 7.5 PBS overnight. One hundred grams of the dimmed peanut kernels were placed in a tissue triturator (NETZSCH Lab Horizontal Mill LMZ 0.5), homogenated at 3,000 rpm for 1 minute after adding 500mL buffers (100mM PBS, pH 7.5), and then homogenated at 10,000 rpm for 2 minutes for three times. The resultant mixture was filtered through a two-layer cheese cloth. The cake on the cheese cloth was pressed. The residual filter cake was ground and filtered again under the same conditions. The two filtrates were pooled and filtered through a layer of Microcloth. The finally obtained filtrate was centrifuged at 20,000 $\times$g for 30 minutes. The emulsion layer at the top of the centrifugating tube was collected, which was the crude oil body from peanut.

The crude peanut oil body was placed in a 100mM, pH 7.5 frozen PBS solution and homogenated in high shear homogenizer SPX at 20,000 rpm for 2 minutes. After homogenation, the resultant mixture was centrifugated at 20,000$\times$g for 5 minutes. The emulsion layer was collected, dissolved in buffer, homogenated at 20,000 rpm for 2 minutes, and centrifugated at 10,000$\times$g for 30 minutes. The collection, dissolution, homogenation and centrifugation together formed a cycle and this cycle was repeated three times. Finally the emulsion layer was collected, which was the purified peanut oil body.

Acetone was added in a 1:1 ratio into the peanut oil body. The mixture was subjected to an ice bath with gentle agitation for 10-15 minutes. Then, the mixture was low-temperature centrifugated at 10,000 $\times$g for 10 minutes. The supernate was removed, and 100mM PBS (pH 7.5) with the same volume as the precipitate was added to suspend the precipitate. The suspension was centrifuged at 10,000 $\times$g for 30 minutes and the supernate was removed. After washing 3 times, the purified peanut oil body protein was obtained.

**Example 3: Protein Detection: SDS-PAGE electrophoresis** (not falling within the scope of the claims)

The resultant purified peanut oil body protein and algal protein were diluted by 100mM PBS, pH 7.5 in a volume ration of 5:1, respectively and then 5$\times$SDS-PAGE loading buffer were added to each solution. The mixtures were cooked for 5 minutes. A 15% protein revolving gel and a 6.7% stacking gel were used. Electrophoresis was performed at 90 V constant voltage initially and the voltage was adjusted to 180 V after bromophenol blue migrated into the revolving gel. The power was shut off after the bromophenol blue band moved out of the gel and the electrophoresis was finished. The gel was placed into a clean vessel. Thirty milliliters of staining solution for protein electrophoresis was added and the mixture was heated in microwave oven for 2 minutes. Then, the vessel was placed on a horizontal shaking table running at 100 rpm for staining for 1 hour. The staining solution was removed and a certain amount of destaining solution was added to wash the bands 3-4 times, each 20 minutes, until the protein bands became clear.

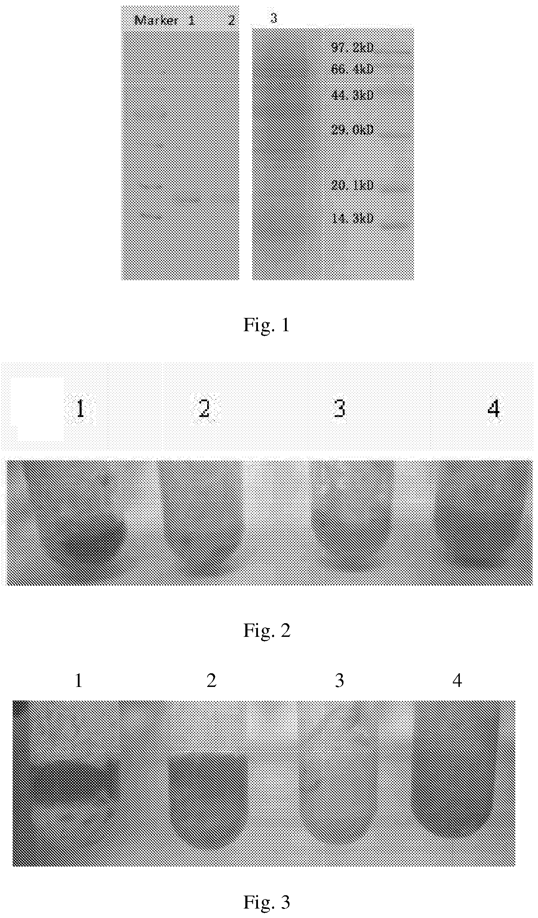

The results of the protein electrophoresis are shown in Fig. 1, in which lane 1 shows the peanut oil body protein obtained by precipitating with acetone, lane 2 shows the peanut oil body protein obtained by precipitating with acetone and then washing with PBS, and lane 3 shows the proteins obtained by precipitating the algal oil body with acetone. According to Fig. 1, the molecular weight of the peanut oil body protein was about 16kD. There was an impurity band after precipitation with acetone. The impurity band disappeared and only one clear band was observed after washing with buffer. The purified peanut oil body protein presented at the position of 16kD (lanes 1 and 2). The algal oil body was rich in proteins, but showed less protein bands at the position of 15-25kD, indicating that no oil body protein or analogues were present (lane 3).

**Example 4: Preparation of Modified Algal Oil Body and Test for its Stability**

Two hundred micrograms of phosphatidylcholine was dissolved in chloroform and placed in a chemical hood for volatilization overnight. To the phosphatidylcholine solution, 19.6 mg algal oil bodies together with $100\mu g$, $200\mu g$, $400\mu g$ or $800\mu g$ peanut oil body proteins were added respectively (numbered as samples 1, 2, 3, and 4, respectively). After sonic oscillation for 20 seconds, the mixtures were placed in an ice bath for 5 minutes. Sonic oscillation was repeated for three times to form an algal oil body mixture. The samples were placed in an oven at 40°C. After 72 hours, the samples were left to stand to observe oil leakage, thereby observing their stability. The oil bodies showed cracking as treatment in oven going on. Oil leakage is defined as presence of leaked oil droplets with clear boundary between the leaked oil and the residual oil body. After treatment in the oven, different samples have different status of oil leakage.

The results are shown in Fig. 2, in which sample 1 is a sample of algal oil body, phosphatidylcholine and protein in a weight ratio of 98:1:0.5, sample 2 is a sample of algal oil body, phosphatidylcholine and protein in a weight ratio of 98:1:1, sample 3 is a sample of algal oil body, phosphatidylcholine and protein in a weight ratio of 98:1:2, sample 4 is a sample of algal oil body, phosphatidylcholine and protein in a weight ratio of 98:1:4.

According to Fig. 2, after 72 hours, in all the 4 tested samples, the modified algal oil bodies all have improved stability. And the stability of the modified algal oil body increases as the amount of the oil body protein increases. In all the 4 samples, the algal oil body of sample 4 is of most stable. This may result from the increased ratio of protein, which results in more sufficient package of the algal oil body.

Our subsequent experiments show that the stability of the algal oil body does not increase after the amount of the oil body protein reaches a certain value. The preferred weight ratio between the algal oil body and the oil body protein is 98:4. Currently, 98:10 by weight of algal oil body to oil body protein is a permissible ratio that can be used to increase the stability of the algal oil body without producing obvious off odour.

**Example 5**

Zero micrograms, $100\mu g$, $200\mu g$ and $400\mu g$ phosphatidylcholine were dissolved respectively in chloroform and placed in a chemical hood for volatilization overnight. To the phosphatidylcholine solutions, 19.6 mg algal oil bodies and $800\mu g$ peanut oil body proteins were added (numbered as samples 1, 2, 3, and 4, respectively). After sonic oscillation for 20 seconds, the mixtures were placed in an ice bath for 5 minutes. Sonic oscillation was repeated for three times to form an algal oil body mixture. The samples were placed in an oven at 40 °C. After 72 hours, the samples were left to stand to observe oil leakage. The oil bodies showed cracking as treatment in oven going on. Oil leakage is defined as presence of leaked oil droplets with clear boundary between the leaked oil and the residual oil body. After treatment in the oven, different samples have different status of oil leakage. Results are shown in Fig. 3.

As shown in Fig. 3, the stability of algal oil bodies with added oil body protein increase in the presence of phosphatidylcholine. And, when the weight ratio (parts by weight) of algal oil body, phosphatidylcholine to protein is 98:1:4 or 98:2:4, the stability is better than that at the weight ratio of 98:0.5:4, indicating that the oil body protein and phosphatidylcholine can well cooperate to pack the algal oil body, prevent oil leakage and increase stability.

**Example 6: Detection of Particle Size of the Modified Oil Body**

According to the results in Example 4, the sample in which the weigh ratio of algal oil body, phosphatidylcholine and protein is 98:1:4 was used in the comparison experiments with three control samples, control 1 comprising algal oil body and phosphatidylcholine (sob+p, 98:1, parts by weight), control 2 comprising algal oil body and peanut oil body protein (sob+ole, 98:4, parts by weight), and control 3 comprising algal oil body without adding any other component (sob, 98 parts by weight). The samples were treated as described above. Specifically, they were subjected to sonic oscillation to form mixtures and then the particle size of each sample was detected.

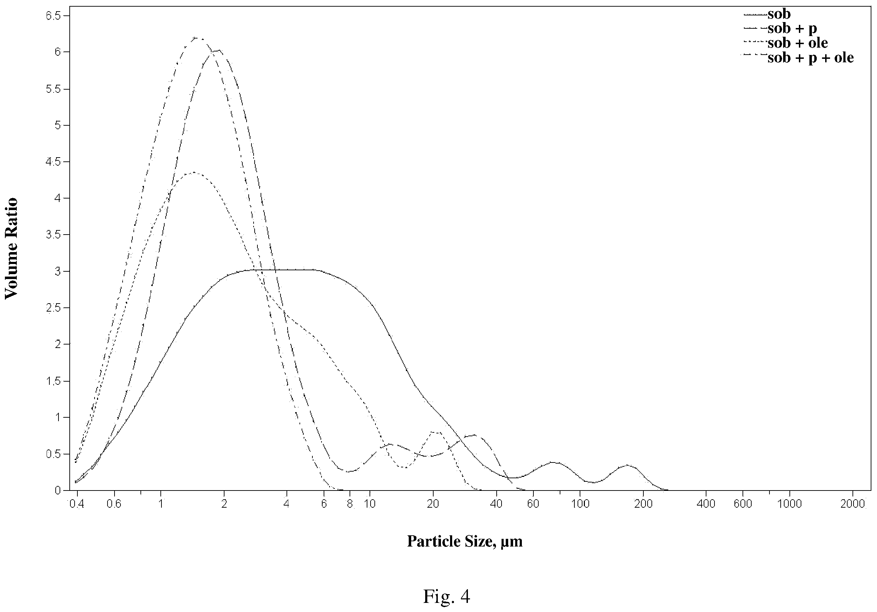

The statistical data of the particle size are shown in Fig. 4. From Fig. 4, the particle size of the algal oil body is mainly distributed in the range of about 2-4$\mu$m, which is relatively broad. After adding phosphatidylcholine or peanut oil body protein, the particle size can be reduced, but there are impurity peaks, and the distribution of the particle size is not uniform. However, addition of both phosphatidylcholine and peanut oil body protein can make the particle size be close to the natural plant oil body, which is in average 2$\mu$m. And the distribution range is narrowed to mainly 1.5-3.5$\mu$m, indicating that the algal oil body has formed a relatively uniform and stable disperse emulsion system. Thus, adding oil body protein and reducing the use of phosphatidylcholine can reduce the cost caused by the expensive phosphatidylcholine.

Additionally, other experiments with different weight ratios were also performed.

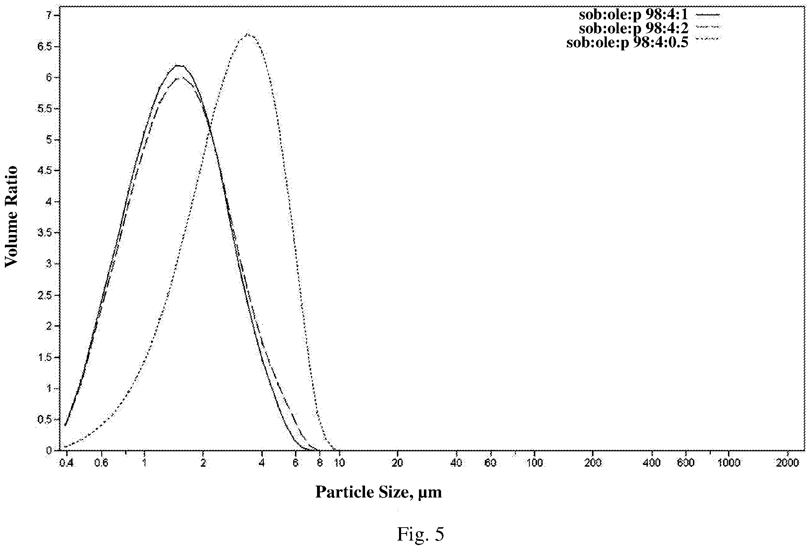

According to the weight ratios of algal oil body, phosphatidylcholine to protein, the following three samples were prepared: 98:0.5:4 of algal oil body, phosphatidylcholine to protein; 98:1:4 of algal oil body, phosphatidylcholine to protein, and 98:2:4 of algal oil body, phosphatidylcholine to protein. They were treated as described above. Specifically, they were subjected to sonic oscillation to form mixtures and then the particle size of each sample was detected. The results are shown in Fig. 5.

The results in Fig. 5 show that the three samples have uniform emulsion system, small particle size and good stability. The samples in which the ratio of algal oil body, phosphatidylcholine to protein is 98:1:4 or 98:2:4 have the most uniform emulsion system. As compared to the sample with 98:0.5:4 of algal oil body, phosphatidylcholine to protein, they have smaller particle size and better stability.

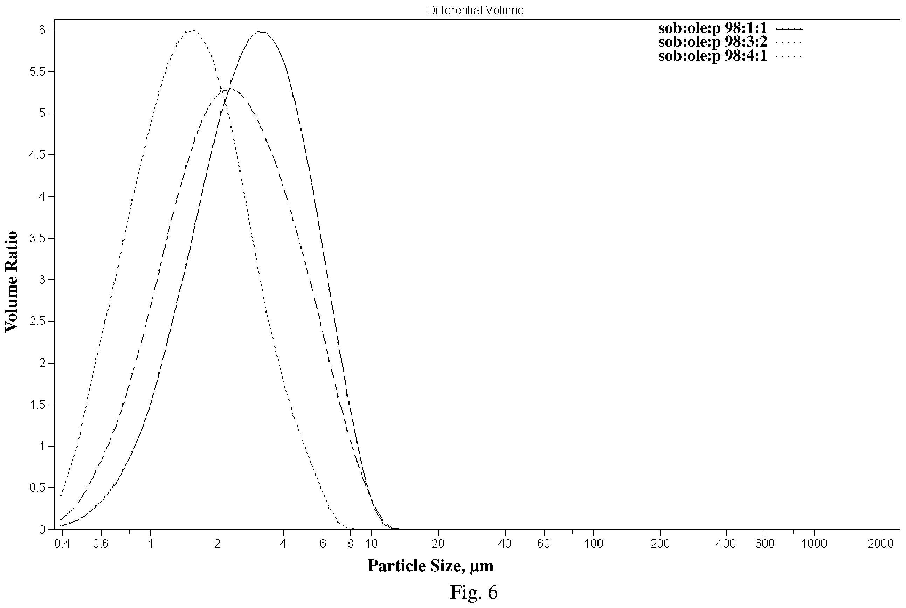

Another three samples were prepared according to the weight ratio of algal oil body, phosphatidylcholine to protein, which include 98:1:1 of algal oil body, phosphatidylcholine to protein; 98:1:3 of algal oil body, phosphatidylcholine to protein, and 98:1:4 of algal oil body, phosphatidylcholine to protein. They were treated as described above. Specifically, they were subjected to sonic oscillation to form mixtures and then the particle size of each sample was detected. The results are shown in Fig. 6.

The results in Fig. 6 show that the three samples have uniform emulsion systems, small particle size and good stability, with the sample in which the ratio of algal oil body, phosphatidylcholine to protein is 98:1:4 having the most uniform emulsion system.

**Example 7: Test on oxidation resistance**

Five samples, which are algal oil (so), algal oil body (sob), algal oil body + phosphatidylcholine (sob + p, 98:1), algal oil body + peanut oil body protein (sob + ole, 98:4), and algal oil body + phosphatidylcholine + peanut oil body protein (sob + p + ole, 98:1:4), were placed into an over at 40°C and each oxidative index was detected at every 12 hours.

I. Detection of Conjugated Diene Value (DV)

Conjugated diene value, also termed as diene value, is meant to the gram of iodine which is converted from the desired maleic anhydride in 100 g oil. Diels-Alder reaction may be taken place between maleic anhydride and the conjugated diene in the oil. Thus, the diene value is a characteristic index for identifying the conjugated system presented in the unsaturated fatty acids of the oil. Higher diene value indicates much serious oxidation of the oil.

The DV was detected as follows: 0.01-0.03 g oil or oil extract were precisely weighted, placed into a 25 ml measuring flask, and diluted with isooctane to 25 ml to prepare an oil sample solution. The solvent, isooctane, was added into the reference slot of spectrophotometer, as a blank control. The absorbance ($A_\lambda$) of the oil sample solution in the sample slot was detected at 233 nm. The equation is as follows:

$$E_{1\,cm}^{1\%} = \frac{A_\lambda}{(c_L \times l)} \tag{1}$$

wherein E is extinction value, $A_\lambda$ is absorbance at 233 nm, $C_L$ is the mass of the 100 ml oil, and 1 is the length of the path of the cuvette.

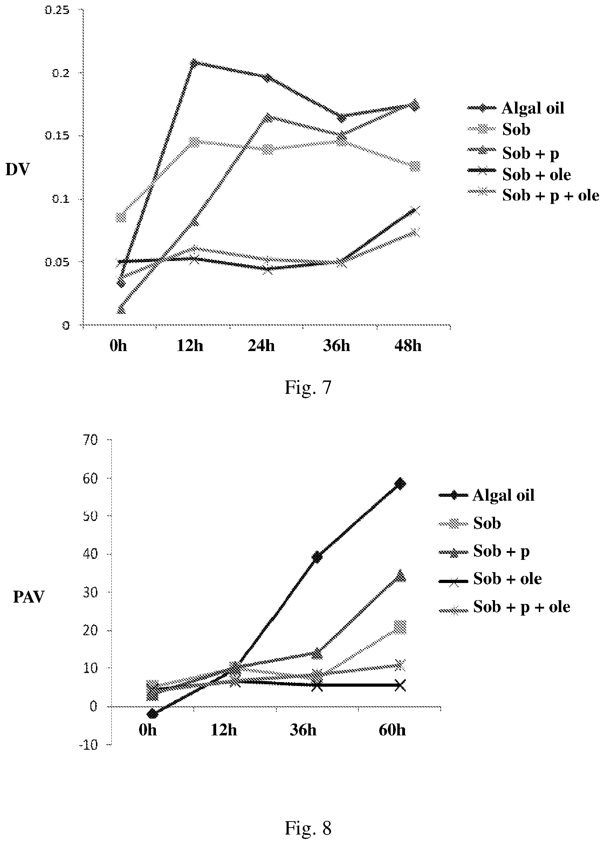

Results are shown in Fig. 7. From Fig. 7, the algal oils of the five samples were oxidized to different degrees as treatment in oven going on. The algal oil body having phosphatidylcholine was unstable and produced a great amount of automatically produced oxidative products. Therefore, phosphatidylcholine is not an ideal anti-oxidant for algal oil. However, when both phosphatidylcholine and peanut oil body protein were added, or only the peanut oil body protein was added, the oxidation of the free radicals in the algal oil body could be effectively controlled and the increase of DV was relatively gentle.

II. Detection of Peroxide Value (PV)

Peroxide value is an index indicating the primary oxidation of oil and fatty acid and the rancidity degree of the oil. Generally, higher peroxide value indicates relatively obvious rancidity. Peroxide value is meant to the content of active oxygen in 1 kg sample and is expressed as meq/kg of the peroxide.

In the subject application, the PV was determined according to GB/T5009.37-2003. Specifically, 2-3 g homogeneously mixed samples were precisely weighted and placed into a 250 ml iodine flask. A mixture of trichloromethane and glacial acetic acid (30 ml, 2:3) was added to dissolve the samples. Then, 1 ml saturated potassium iodide solution was added. The flask was tightly sealed by its bottle plug and gently shook for 0.5 minutes. The flask was then placed in dark for 3 minutes, taken out, added thereinto 100 ml water and shook up. Titration was immediately carried out by using 0.002 mol/L sodium hyposulfite standard solution. One milliliter starch indicator was added when the solution turned to light yellow. Titration was continued until the blue color faded away. The same amount of trichloromethane-glacial acetic acid solution, potassium iodide solution and water were used as blank control to perform the above test.

PV is calculated by the following equation:

$$X_1 = \frac{c * (V1 - V2) * 0.1269}{m} * 100 \qquad (2)$$

$$X_2 = X_1 * 78.8 \qquad (3)$$

wherein:

$X_1$ is the PV of sample, expressed by g/100 g;
$X_2$ is the PV of sample, expressed by meq/kg;
VI is the volume of the sodium hyposulfite standard solution depleted by the sample, expressed by mL;
V2 is the volume of the sodium hyposulfite standard solution depleted by the blank control, expressed as mL;
c is the molar concentration of the sodium hyposulfite standard, expressed by mol/L;
m is the mass of the sample, expressed by gram (g);
0.1269 is the mass of iodine which corresponds to the mass of 1.00 mL sodium hyposulfite standard titration solution [c ($Na_2S_2O_3$)=1.000 mol/L], expressed by gram (g);
78.8 is a conversion factor.

Table 1 lists out the PVs of five samples tested for every 12 hours in the 40°C oven according to GB/T5009.37-2003.

The results show that after treatment in oven for 48 hours, the PV of algal oil body (sob) is at most 1/5 of the PV of the algal oil (so). The peroxide values of the algal oil body + peanut oil body protein (sob + ole) and the algal oil body + phosphatidylcholine + peanut oil body protein (sob + p + ole) are almost not changed within 48 hours, and are at most 1/20 of the PV of the algal oil (so).

The above results demonstrate that the peanut oil body protein could pack the algal oil body to produce more stable structure and to prevent algal oil body from interference from outside conditions.

**Table 1: PV of five samples within 48 hours**

| Time (h) | So (meq/kg) | sob (meq/kg) | sob+p (98:1) (meq/kg) | sob+ole (98:4) (meq/kg) | sob+p+ole (98:4:1) (meq/kg) | Sob+p+ole (98:1:1) (meq/kg) |
|---|---|---|---|---|---|---|
| 0 | 7.8-10.4 | 4.7-9.5 | 2.2-4.3 | <2.0 | <2.0 | 2.0-4.0 meq/kg |
| 12 | 19.3-25.0 | 4.7-9.5 | 10.4-15.6 | <3.0 | <2.0 | 7.5-10 meq/kg |
| 24 | 43.1-51.7 m | 8.7- 13.0 | 10.4-15.6 | <2.0 | <3.0 | 11.0-14.7 meq/kg |
| 36 | 70.3-75.2 | 14.2-19.0 | 34.1-39.8 | <4.0 | <2.0 | 19.2-22.4 meq/kg |
| 48 | 115.4-125.0 | 21.8-25.0 | 46.4-50.0 | <4.0 | <4.0 | 19.7-23.0 meq/kg |

III. Detection of PAV (p-Anisidine p value)

Anisidine value is an index indicating the amount of the secondary products, unsaturated aldehydes, such as aldehydes, ketones and quinones, in the oil. If the oil contains a lot of such kind of substances, aldehydes and ketones of small molecular weight will readily be produced during heating. Anisidine value is used to evaluate the amount of secondary oxidative products $\alpha$-unsaturated aldehydes and $\beta$-unsaturated aldehydes (2-alkyl aldehydes and 2,4-diene aldehydes).

In the subject application, the PAV was determined according to GB/T24304-2009. Specifically, 0.5-4.0 g oil samples (accurate to 0.001 g) were weighted, placed in a 25 ml measuring flask, dissolved and diluted with isooctane to 25 ml to prepare an oil sample solution. The solvent was loaded into the reference slot of spectrophotometer (Shanghai Tianmei, UV1000) as a blank control. The absorbance ($A_b$) of the oil sample solution in the sample slot was detected at 350 nm.

Five milliliters of oil sample solution were accurately sucked into a first tube, and another 5 ml of oil sample solution were accurately sucked into a second tube. One milliliter p-anisidine reagent was added by pipette accurately to each tube. The tubes were shook.

Ten minutes later, the solution from the second tube was loaded into the reference slot, as a blank control, and the oil sample solution from the first tube was loaded into the sample slot and its absorbance ($A_s$) was determined at 350 nm.

The PAV was calculated according to the following equation:

$$P - PAV = \frac{25 \times (1.2A_s - A_b)}{W}$$

$$(4)$$

wherein:

$A_s$ is the absorbance of the oil sample solution after reaction with p-anisidine reagent;
$A_b$ is the absorbance of the oil sample solution;
W is the mass of the oil sample (g).

PAVs are shown in Fig. 8. According to Fig. 8, the secondary oxidative products all increase over the oxidative time. After 60 hours, the anisidine value of the algal oil is greatly increased, while the anisidine value of the algal oil body is merely about 1/3 of that of the algal oil. After addition of peanut oil body protein, the PAV is not changed and is maintained at the initial value. The above data demonstrates that, within 60 hours, the peanut oil body protein could stop secondary oxidation of the algal oil to some extent.

### Example 8

Modified algal oil bodies were prepared according to the methods of Examples 4-7 by replacing phosphatidylcholine with phosphatidylinositol, phosphatidylethanolamine and phosphatidylserine, respectively. The stability, oxidation resistance and particle size of the modified algal oil bodies were detected. The results show that the algal oil bodies modified by phosphatidylinositol, phosphatidylethanolamine or phosphatidylserine have similar stability, oxidation resistance and particle size to the algal oil body modified by phosphatidylcholine. Specifically, as for the stability, addition of oil body protein can confer the algal oil body with good stability. The algal oil does not readily leak out. Under the combined action of the oil body protein and phospholipid, the algal oil body could have more uniform and ideal particle size. For oxidation resistance, addition of oil body protein could improve the oxidation resistance property of the algal oil body and reduce the primary and secondary oxidative products.

### Claims

1. A composition comprising 50-100 parts by weight of an algal oil body, 0.5-10 parts by weight of a phospholipid and 0.5-10 parts by weight of an oil body protein, wherein the oil body protein is an oil body protein from oil crops and the particle size of 50% or more of the algal oil body particles in the composition, have a particle size distributing in the range of 1.5-3.5$\mu$m.

2. The composition of claim 1, wherein the oil body protein is from peanut.

3. The composition of claim 1, wherein the algal oil body is produced from oil-producing algae, preferably from *Schizochytrium sp., Thraustochytrium sp.,* and/or *Crypthecodinium sp.*

4. The composition of claim 1, wherein the algal oil body comprises 70-100 parts by weight, preferably 90-100 parts by weight; the phospholipid comprises 0.5-5 parts by weight, preferably 1.0-2.5 parts by weight; and the oil body protein comprises 2-5 parts by weight, preferably 2.5-4.5 parts by weight.

5. The composition of claim 1, wherein the particle size of 50% or more of particles in the composition, have a particle size distributing in the range of 1.5-2.5$\mu$m, preferably 1.5-2.0$\mu$m.

6. A method for stabilizing an algal oil body to prevent oil leakage or for improving the oxidation resistance of an algal oil body, comprising
adding 0.5-10 parts by weight of a phospholipid and 0.5-10 parts by weight of an oil body protein from oil crops to 50-100 parts by weight of the algal oil body to produce a mixture; and subjecting the mixture to sonic oscillation to produce the algal oil body with 50% or more of particles having a particle size distributing in the range of 1.5-3.5$\mu$m.

7. The method of claim 6, wherein the oil body protein is from peanut.

8. The method of claim 6 or 7, wherein the algal oil body is produced from oil-producing algae, preferably from *Schizochytrium sp., Thraustochytrium sp.,* and/or *Crypthecodinium sp.*

9. The method of claim 6 or 7, wherein the algal oil body comprises 70-100 parts by weight, preferably 90-100 parts by weight; the phospholipid added comprises 0.5-5 parts by weight, preferably 1.0-2.5 parts by weight; and the oil body protein added comprises 2-5 parts by weight, preferably 2.5-4.5 parts by weight.

10. The method of any of claims 6-9, wherein the sonic oscillation lasts 5-30 seconds, preferably 10-25 seconds.

11. The method of claim 10, wherein after sonic oscillation for the above indicated time, the resultant mixture is subjected to an ice bath for 1-10 minutes.

12. The method of claim 11, wherein the sonic oscillation and the treatment with ice bath are repeated for 2-5 times.

**Patentansprüche**

1. Eine Zusammensetzung, umfassend 50-100 Gewichtsteile eines Algenölkörpers, 0,5-10 Gewichtsteile eines Phospholipids und 0.5-10 Gewichtsteile eines Ölkörperproteins, wobei das Ölkörperprotein ein Ölköperprotein aus Ölpflanzen ist, und wobei die Partikelgröße von 50 % oder mehr der Algenölkörperpartikel in der Zusammensetzung eine Verteilung der Partikelgröße in dem Bereich von 1,5-3,5 $\mu$m aufweist.

2. Die Zusammensetzung nach Anspruch 1, wobei das Ölkörperprotein von Erdnuss ist.

3. Zusammensetzung nach Anspruch 1, wobei der Algenölkörper aus ölproduzierenden Algen hergestellt ist, vorzugsweise aus *Schizochytrium sp., Thraustochytrium sp.,* und/oder *Crypthecodinium sp.*

4. Die Zusammensetzung nach Anspruch 1, wobei der Algenölkörper 70-100 Gewichtsteile umfasst, vorzugsweise 90-100 Gewichtsteile; wobei das Phospholipid 0,5-5 Gewichtsteile umfasst, vorzugsweise 1,0-2,5 Gewichtsteile; und wobei das Ölkörperprotein 2-5 Gewichtsteile umfasst, vorzugsweise 2,5-4,5 Gewichtsteile.

5. Die Zusammensetzung nach Anspruch 1, wobei die Partikelgröße von 50 % oder mehr der Partikel in der Zusammensetzung eine Verteilung der Partikelgrößen in dem Bereich von 1,5-2,5 $\mu$m, vorzugsweise 1,5-2,0 $\mu$m, aufweist.

6. Ein Verfahren zur Stabilisierung eines Algenölkörpers zwecks Vermeidung des Austritts von Öl oder zur Verbesserung der Oxidationsbeständigkeit eines Algenölkörpers, umfassend
Zugabe von 0,5-10 Gewichtsteilen eines Phospholipids und von 0,5-10 Gewichtsteilen eines Ölkörperproteins aus Ölpflanzen zu 50-100 Gewichtsteilen des Algenölkörpers, um eine Mischung herzustellen; sowie Aussetzen dieser Mischung einer akustischen Beschallung, um den Algenölkörper mit 50 % oder mehr von Partikeln mit einer Verteilung der Partikelgröße in dem Bereich von 1,5-3,5 $\mu$m herzustellen.

7. Das Verfahren nach Anspruch 6, wobei das Ölkörperprotein von Erdnuss ist.

8. Das Verfahren nach Anspruch 6 oder 7, wobei der Algenölkörper aus ölproduzierenden Algen hergestellt ist, vorzugsweise aus *Schizochytrium sp., Thraustochytrium sp.,* und/oder *Crypthecodinium sp.*

9. Das Verfahren nach Anspruch 6 oder 7, wobei der Algenölkörper 70-100 Gewichtsteile umfasst, vorzugsweise 90-100 Gewichtsteile; wobei das hinzugefügte Phospholipid 0,5-5 Gewichtsteile umfasst, vorzugsweise 1,0-2,5 Gewichtsteile; und wobei das hinzugefügte Ölkörperprotein 2-5 Gewichtsteile umfasst, vorzugsweise 2,5-4,5 Gewichtsteile.

10. Das Verfahren nach einem der Ansprüche 6-9, wobei die akustische Beschallung 5-30 Sekunden dauert, vorzugsweise 10-25 Sekunden.

11. Das Verfahren nach Anspruch 10, wobei nach der akustischen Beschallung für die oben angegebene Zeitspanne die resultierende Mischung für 1-10 Minuten einem Eisbad ausgesetzt wird.

12. Das Verfahren nach Anspruch 11, wobei die akustische Beschallung und die Behandlung mit dem Eisbad 2-5 mal wiederholt werden.


**Revendications**

1. Composition comprenant 50 à 100 parties en poids d'un corps gras d'algue, 0,5 à 10 parties en poids d'un phospholipide et 0,5 à 10 parties en poids d'une protéine de corps gras, dans laquelle la protéine de corps gras est une protéine de corps gras provenant de cultures oléagineuses et la granulométrie de 50 % ou plus des particules de corps gras d'algue dans la composition a une distribution de granulométrie située dans la plage allant de 1,5 à 3,5 $\mu$m.

2. Composition selon la revendication 1, dans laquelle la protéine de corps gras provient d'arachide.

3. Composition selon la revendication 1, dans laquelle le corps gras d'algue est produit à partir d'algues produisant de l'huile, de préférence à partir de *Schizochytrium sp., Thraustochytrium sp.,* et/ou *Crypthecodinium sp.*

4. Composition selon la revendication 1, dans laquelle le corps gras d'algue représente 70 à 100 parties en poids, de préférence 90 à 100 parties en poids ; le phospholipide représente 0,5 à 5 parties en poids, de préférence 1,0 à 2,5 parties en poids ; et la protéine de corps gras représente 2 à 5 parties en poids, de préférence 2,5 à 4,5 parties en poids.

5. Composition selon la revendication 1, dans laquelle la granulométrie de 50 % ou plus des particules dans la composition a une distribution de granulométrie située dans la plage allant de 1,5 à 2,5 $\mu$m, de préférence de 1,5 à 2,0 $\mu$m.

6. Procédé pour stabiliser un corps gras d'algue pour empêcher une fuite d'huile ou pour améliorer la résistance à l'oxydation d'un corps gras d'algue, comprenant
l'addition de 0,5 à 10 parties en poids d'un phospholipide et de 0,5 à 10 parties en poids d'une protéine de corps gras provenant de cultures oléagineuses à 50 à 100 parties en poids du corps gras d'algue pour produire un mélange ; et la soumission du mélange à une oscillation sonique pour produire le corps gras d'algue avec 50 % ou plus des particules ayant une distribution de granulométrie située dans la plage allant de 1,5 à 3,5 $\mu$m.

7. Procédé selon la revendication 6, dans lequel la protéine de corps gras provient d'arachide.

8. Procédé selon la revendication 6 ou 7, dans lequel le corps gras d'algue est produit à partir d'algues produisant de l'huile, de préférence à partir de *Schizochytrium sp., Thraustochytrium sp.,* et/ou *Crypthecodinium sp.*

9. Procédé selon la revendication 6 ou 7, dans lequel le corps gras d'algue représente 70 à 100 parties en poids, de préférence 90 à 100 parties en poids ; le phospholipide représente 0,5 à 5 parties en poids, de préférence 1,0 à 2,5 parties en poids ; et la protéine de corps gras représente 2 à 5 parties en poids, de préférence 2,5 à 4,5 parties en poids.

10. Procédé selon l'une quelconque des revendications 6 à 9, dans lequel l'oscillation sonique dure 5 à 30 secondes, de préférence 10 à 25 secondes.

11. Procédé selon la revendication 10, dans lequel, après l'oscillation sonique pendant le temps indiqué ci-dessus, le mélange résultant est soumis à un bain de glace pendant 1 à 10 minutes.

12. Procédé selon la revendication 11, dans lequel l'oscillation sonique et le traitement avec un bain de glace sont répétés 2 à 5 fois.

Fig. 1

Fig. 2

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1952695 A

**Non-patent literature cited in the description**

- **MICHAEL H et al.** Biofuels from algae: challenges and potential. *Biofuels,* 2010, vol. 1, 763-784

- **NGUYEN HM et al.** *Proteomic profiling of oil bodies isolated from the unicellular green micro-alga Chlamydomonas reinhardtii: With focus on proteins involved in lipid metabolism,* 2011, vol. 11, 4266-73